# EUROPEAN PATENT SPECIFICATION

(11) **EP 2 140 315 B1**
(45) Date of publication and mention of the grant of the patent: **02.01.2013**
(21) Application number: 08751551.6
(22) Date of filing: 15.04.2008
(51) Int. Cl.: G05B 19/042, G05B 19/4063, G05B 9/02, G01M 3/18

(54) **ELECTRONIC SYSTEM SECURITY AND CONTROL OF WATER SUPPLY, LIQUIDS IN GENERAL AND GAS, ALSO THROUGH GSM MODULE**
ELEKTRONISCHE SYSTEMSICHERHEIT UND KONTROLLE VON WASSERVERSORGUNG, FLÜSSIGKEITEN IM ALLGEMEINEN UND GAS, AUCH ÜBER GSM-MODUL
COMMANDE ET SÉCURITÉ DU SYSTÈME ÉLECTRONIQUE D'ALIMENTATION EN EAU, EN LIQUIDES EN GÉNÉRAL ET EN GAZ, ÉGALEMENT PAR L'INTERMÉDIAIRE D'UN MODULE GSM

(30) Priority: 20.04.2007 IT CL20070030
(43) Date of publication of application: 06.01.2010
(73) Proprietor: Diprima, Paolo, 93100 Caltanissetta (IT)
(72) Inventor: Diprima, Paolo, 93100 Caltanissetta (IT)
(86) International application number: PCT/IT2008/000250
(87) International publication number: WO 2008/129578

(56) References cited:
- EP-A- 1 104 874
- WO-A-2005/119609
- US-A- 6 025 788
- US-A1- 2003 066 340
- US-B1- 6 237 618

## Description

System security and control, also at distance through GSM module, of water supply, liquids and gas supply (of urban facilities for civil houses, cylinder, fixed gas cylinder) by opening and /or closing multiple automatic electromechanical valves.

The management system is based on an electronic control divided into gas/ section and liquid section and a series of sensors, as presence detectors, detectors of gas and liquids, located in the most appropriate place and at the discretion of the user.

As Regards as the valves related to gas section, these valves should be installed outside the house or working place to prevent that the escape of gas that could happen in the section of pipe located before the electronic valve, may spread inside the environment that is monitored, thus thwarting, in this way the installation and use of the system itself.

Also for the water /liquid section, for the positioning of the electronic valve, we use the same principles made for the gas section.

In any case for both gas / liquid sections it is advisable to install the valves outside the environment that we want to preserve in order to obtain the maximum security; but, of course, the user can install the valves where it seems appropriate for him/her and beneficial to the own needs.

The user can control the various functions of the system through the central unit that is programmable with buttons START/ STOP that are inside the environment, or check the status of the system at a distance by a GSM module integrated within the central unit which can send messages of signals or alarm and receive instructions command and / or control.

### The bases of the technique

The principle of working of the invention is based on the possibility of closing (and therefore stopping) the flow of the liquid and / or of inflammable gas automatically after a certain time.

The period of opening of the electric valves is programmable by the user who may also close them at any time and immediately through STOP buttons. In the case of loss of gas or water leak, these events are detected by special sensors (supplied to the system), and the valves will be closed immediately.

The emergency intervention will be indicated through alarms and lights produced by the electronic central unit and also through calls or SMS messages - the GSM module.

When the presence of people is not detected in the environment- by special infrared sensors and /or micro-waves -, after a certain period of time, predetermined by the user, the valves are closed.

A similar system is also disclosed in EP1104784, in the name of the same inventor. However this system is not provided with means that allow the user to know when the valves are closing, in order to prevent the closure. Moreover, this system has not been implemented and placed on the market.

The automated equipment that are normally available on the market are based only on detection of the presence of flammable gases, potentially dangerous, in environments such as kitchens and bathrooms or where there are burners or gas stoves, and they are involved only when the saturation of gas becomes very dangerous. These considerations are also extensible to the control of non-dangerous liquids, such as water, but that nevertheless represents, especially in the condominium, the main cause of damage to structures and ceiling- roofing (see flooding and infiltration).

### THE OBJECTIVE THAT THE INNOVATION INTENDS TO REACH

As said before, the purpose that the systems aims to reach is to prevent that in any house, craft or industrial environment, there may be dangerous gas leaks (with consequent danger of fire), or very harmful flooding. The control system is, in fact, based on electronic timers divided into two distinct sections, working independently of one another; one section sets and manages the opening and closing of electro valves in the gas section, while the other section sets and manages the opening and closure of the electromagnetic-valve section related to water / liquid, with independent times and way of programming.

Since opening times of the system are determined by the user, the system can also avoid the burning of food cooking forgotten on the stove (because the person involved in that activity is out of the room or sleepy ): This forgetfulness may become very dangerous and harmful and cause fires. The same considerations are for the liquid section, because if the user forgets a tap open or there is a rupture or leak in the water system, the valves will close immediately it because of the detection by sensors of the presence of water on floor (or on the point chosen by the user). These abnormal events will be notified after a call GSM module to the number or phone number specified, or by sending an SMS, in addition to optical and acoustic alerts placed on the central unit.

### Analysis of the achieved results.

### Detailed description of the gas section.

The management system is based, as already mentioned, on the control of the safety valve of Gas installed outside the environment; this control is effected by a timer programmable by the user (through a special command placed on the control unit system, with set times ranging from a few minutes to several hours) and one or more sensors that detect the presence of the movement of people within the environment which you want to control. If the sensor does not detect any presence in the environment (which in this case is considered not controlled), after the programmed time, the valve will be closed automatically after the predetermined time ; in other words, if in the house there is not any person, the system automatically closes the valve. But before closing the valve, the central unit beeps, in a way easily recognizable, for a predetermined time, thus alerting people that are not in the monitored environment, but staying near or inside the house , that the system will close the valve.

In this way the user can restore the normal functioning-and avoid the closure of the electro valve, simply when he is detected by the presence sensor. In this case, the timer will be reinitialized again. This is considered normal operation; in any case, the electronic central- system is able to detect any leaks or spills and gas fumes (through a sensor put within the unit or at a remote location ) when the concentration exceeds the limit ( and it is judged dangerous) the valve will be closed immediately and in no way you can resume the delivery, nor through the start button, until the concentration of gases or fumes come back to normal levels.
This security procedure is managed by the central unit.

The electro valves are controlled by buttons for opening and closing that are installed inside the environment and placed in a position established by the user and / or remote location compared to the central unit system. In particular, the button, called START, opens valves and starts the cycle timing and monitoring described above, while the STOP button has a function to close the electro valves at any time and at any stage of operation of the central unit; all this is then considered as a command emergency and / or safety. Through these two buttons the user has the complete and immediate control of the electromechanical valves.

### Details of the water / liquid section:

The control system of the liquid section is made by electronic central unit and has an operation very similar to that of gas section but it is totally independent as regards the commands, time, sensors and valves. Here, too, there is a timer, with set time from a few minutes to several hours, there is the sensor or presence sensors (placed where you like in the rooms and functionally distinct from those of the gas section); there is the START button to start the opening of the electro valves ( They may be more than one to close distinct water systems for water supply; they may be independent one another). The STOP button is used to close immediately the valves that we want to be closed. They are totally independent from the gas section. It is possible to install control sensors of liquids (such as humidity sensors, water detectors that detect the presence of water on the floor, or on other surfaces, or floating) in order to prevent and avoid flooding or leakage of liquids from containers that contain them. In a manner very similar to gas section these sensors-once-activated determine the immediate closure of its cut-off valves.

This section, unlike the one on the gas, allows a manual management for the opening and closing of valves, using a specific button, known as AUTO / MANUAL placed in the central unit and installed remotely through a button (located in a comfortable position). Through this button you can exclude the timer and thus avoid the automatic closure of the valve that in this way will be handled only by the buttons Start (opening) and Stop (Close). Of course the leakage detected by special sensors will cause the immediate closure of the electro valves, since this function of this monitoring can not be excluded.

As Regards as the automatic mode of operation of the cycle, it will start by the START button, it will open the electro valve opens as well as the timer. If the sensor or sensors section related to liquid water section do -not detect any presence after the set time, the electromagnetic -valve is automatically closed. But before doing so, the central unit beeps, in a way easily recognizable, for a predetermined time, thus alerting people that are not in the near environment, but staying near or inside the house, of the imminent closure of valves.

In this way the user can restore the normal functioning-and avoid the closing of valves - simply because he is detected by the presence sensor.

Vice versa, if the sensor detects movements within the monitored environment, the timer is constantly being blocked in such a way that, if there is the constant presence of people in movement, the cycle will never end and the valve will always remain open.

### Places of application of the system:

### Houses, Business, Community Associations, Resorts and Caravans.

### Method of application

The system was designed to prevent fire: for example, if a person puts the pot on the stove and forgets it on the same stove, for a variety of reasons, through this system he/she will avoid dangerous overheating and combustion ,because the central unit will close the electro valve automatically, after a predetermined time.

In the case of a gas leak from a pipe or a cooker etcetera, or fumes in general, the closing of valves will be automatically through the detective sensor that is integrated into the security system.

Since the system manages the status of a electro valve it is not important to see the kind of implant and for this reason, the system can also be adapted to the fixed gas cylinders or propane gas and butane, or to new gas methane released by the network. The system can also be installed and /or integrated into vehicles as campers and caravan.

As regards as the water section, through this system of control and management it is possible to avoid any flooding. For example, if a person leaves a tap open, a tap of running water, or from containers or tanks), or if there was the rupture of a tube or a connection, the electronic control will ensure the closure of the system, through detective sensors, and in any case the automatic closing of it immediately, thus limiting the damage caused and / or suffered.

### ANALYSIS OF THE ACHIEVED RESULTS

FINALLY this system allows management to obtain a number of benefits with regard to security and the prevention of accidental events, such as fires and flooding, but also represents a remarkable improvement of living and working conditions, providing control operation and, therefore, security that has not easily found till now.

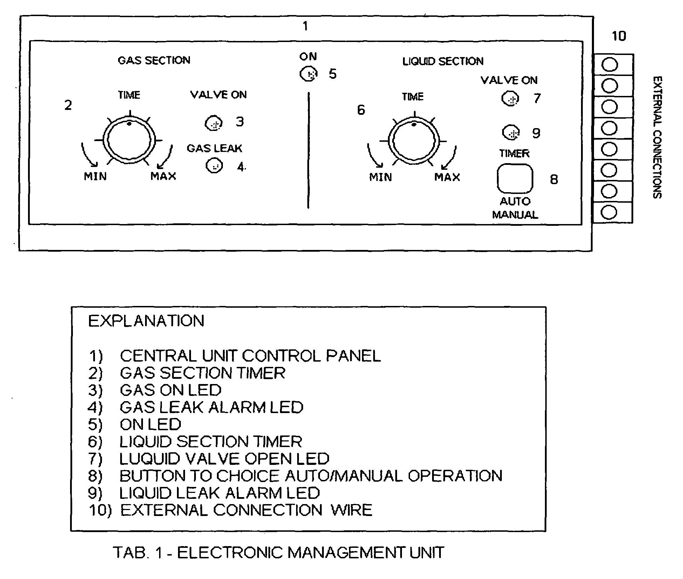

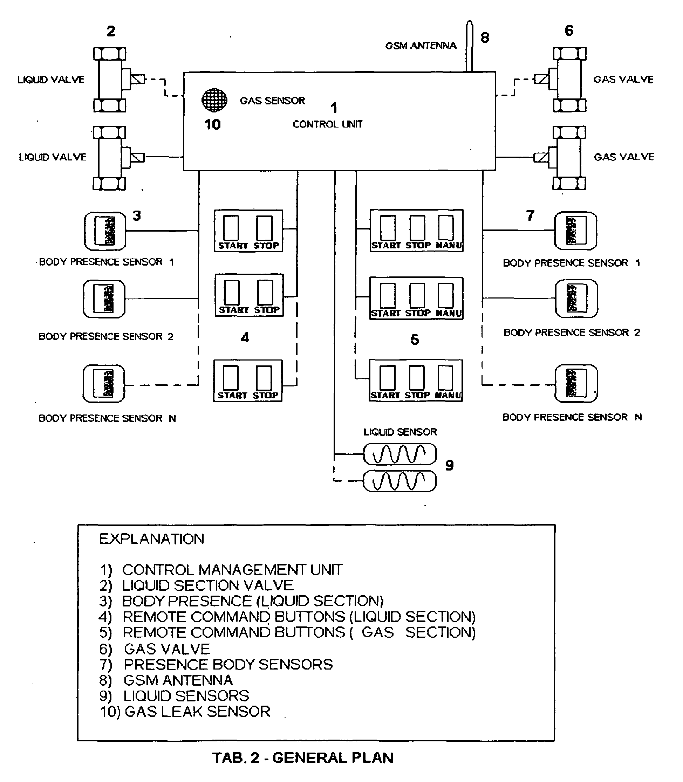

## Claims

1. A control system for liquid and/or gas supply in a premises, comprising:
- at least one electrovalve (2, 6) designed for the interruption of the liquid and/or gas flow towards a premises;
- an electronic control unit (1) having a start button (4, 5) for opening said electrovalve (2, 6), a stop button (4, 5) for closing said electrovalve (2, 6), at least one sensor (3, 7) designed to detect the presence of a person inside the premises and a timer programmable by a user;
wherein after said electrovalve (2, 6) was opened with said start button (4, 5), the control unit (1) starts the timer every time the sensors (3, 7) detect no presence of a person in said premises and stops the timer every time a presence is detected,
wherein said electronic control unit (1) is designed for closing said electrovalve (2, 6) if the timer is expired;
**characterized in that** said control unit (1) is designed to generate an audible signal before closing said electrovalve (2, 6) for signalling the closing thereof and allowing a person to avoid the closure of said electrovalve (2, 6) by being detected by said sensors (3, 7).

2. Control system as claimed in claim 1, **characterized in that** said control unit has a specific button designed to exclude said timer for avoiding the closing of said electrovalve (2, 6) once the timer has expired.

3. Control system as claimed in claim 2, characterized buy comprising an electronic control panel provided with said specific button.

4. Control system as claimed in claim 3, **characterized in that** said central unit (1) comprises a fluid sensor (9, 19) for detecting fluid leaking for closing said electrovalve (2, 6) as a fluid leaking is detected inside the premises.

5. Control system as claimed in any of preceding claims, **characterized by** comprising a GSM module (8) designed to receive instructions command and/or control.

6. Control system as claimed in any of the claims 3 to 5, **characterized in that** said electronic control panel comprises a first section for managing and controlling a gas supply and a second section for managing and controlling a liquids supply.

7. Control system as claimed in claim 6, **characterized in that** at least one of said sections of said electronic control panel has a respective programmable timer, each of said sections having at least one respective electrovalve (2, 6) and respective presence sensors (3, 7).

## Patentansprüche

1. Eine Kontrolleinheit zum Einbringen von Flüssigkeiten oder Gasen in ein Gebäude welches enthält:
- mindestens ein Magnetventil (2,6) zur Unterbrechung des Flüssigkeits/Gasflusses in das Gebäude;
- eine elektronische Kontrolleinheit (1), die einen Startknopf (4,5) zum Öffnen des besagten Magnetventils (2, 6) einen Stopknopf (4, 5) zum Schließen des Magnetventils (2, 6) und mindestens einen Sensor (3, 7), um die Anwesenheit einer Person innerhalb des Gebäudes zu registrieren, sowie einen programmierbaren Timer;
wobei Die Kontrolleinheit (1) startet den Timer jedes mal, wenn das Magnetventil (2, 6) mit dem Startknopf (4, 5) geöffnet wird und der Sensor (3, 7) keine Anwesenheit einer Person registriert, und stoppt den Timer, sobald die Anwesenheit einer Person registriert wird;
wobei Die Kontrolleinheit (1) schließt das besagte Magnetventil (2, 6) sobald der Timer abgelaufen ist;
**dadurch gekennzeichnet, dass** die besagte Kontrolleinheit (1) vorher ein hörbares Signal beim Schließen des Magnetventils (2, 6) erzeugt um zu vermeiden, dass das besagte Magnetventil (2, 6) schließt, wenn eine Person durch die besagten Sensoren (3, 7) registriert wird.

2. Kontrolleinheit gemäß Anspruch 1, **dadurch gekennzeichnet, dass** hat einen spezifischen Knopf der ausschließt, dass der besagte Timer das Magnetventil (2, 6) schließt sobald der Timer abgelaufen ist.

3. Kontrolleinheit gemäß Anspruch 1, **dadurch gekennzeichnet, dass** beinhaltet eine Schalttafel, die den besagten spezifischen Knopf enthält.

4. Kontrolleinheit gemäß Anspruch 3, **dadurch gekennzeichnet, dass** Kontrolleinheit (1) einen Flüssigkeitssensor (9/19) zum Aufdecken von Flüssigkeitsleckagen, der zum Schließen des besagten Magnetventils (2, 6) führt, sobald ein Flüssigkeitsleck innerhalb des Gebäudes registriert wird.

5. Kontrolleinheit gemäß irgendeinem der vorangehenden Ansprüche, **dadurch gekennzeichnet, dass** enthält ein GSM Modul (8) zum Empfangen von Kontroll- oder Kommandoanweisungen.

6. Kontrolleinheit, gemäß irgendeinem der Ansprüche 3 bis 5, **dadurch gekennzeichnet, dass** die besagte Schalttafel ein Bedienfeld zum Steuern und zur Kontrolle der Gasversorgung hat sowie ein zweites Bedienfeld zum Steuern und zur Kontrolle der Flüssigkeitsversorgung hat.

7. Kontrolleinheit gemäß Anspruch 6, **dadurch gekennzeichnet, dass** in mindestens einem der besagten Bedienfelder ein entsprechend programmierbarer Timer vorhanden ist und dass jedes der besagten Bedienfelder mindesten ein entsprechendes Magnetventil (2, 6) sowie entsprechende Anwesenheitssensoren (3, 7) hat.

## Revendications

1. Un système de contrôle pour le débit de liquide ou de gaz à l'intérieur de locaux comprend:
- au moins une électrovalve (2,6) prévue pour l'arrêt de l'écoulement du flux de liquide et/ou de gaz dans les locaux;
- une unité de contrôle électronique (1) ayant un bouton de mise en marche (4,5) pour ouvrir ladite électrovalve (2,6) et un bouton de fermeture (4,5) pour fermer ladite électrovalve (2,6), au moins un détecteur de présence (3,7) projeté pour détecter la présence d'une personne dans les locaux et une horloge que l'usager peut programmer;
dans lequel, après que ladite électrovalve (2,6) a été ouverte au moyen dudit bouton d'ouverture (4,5), l'unité de contrôle (1) fait démarrer l'horloge chaque fois que les détecteurs de présence(3,7) ne détectent pas la présence d'une personne dans lesdits locaux et elle arrête l'horloge chaque fois que cette présence est repérée,
dans lequel, ladite unité de contrôle électronique (1) est prévue pour fermer ladite électrovalve (2,6) si le délai de l'horloge a expiré;
**caractérisé en ce que** ladite unité de contrôle (1) est prévue pour produire un signal sonore avant la fermeture de ladite électrovalve (2,6), pour signaler la fermeture de celle-ci et permettre à une personne ayant été détectée par lesdits détecteurs de présence (3,7) d'éviter la fermeture de ladite électrovalve(2,6).

2. Système de contrôle selon la revendication 1, **caractérisé en ce que** ladite unité de contrôle possède un bouton spécifique prévu pour arrêter l'horloge en évitant la fermeture de ladite électrovalve(2,6) une fois que le délai de l'horloge a expiré.

3. Système de contrôle selon la revendication 2, **caractérisé en ce qu'**il comprend un panneau de contrôle électronique pourvu dudit bouton spécifique.

4. Système de contrôle selon la revendication 3, **caractérisé en ce que** ladite unité de contrôle (1) comprend un détecteur de fluides (9,19) pour détecter la fuite de fluides et fermer ladite électrovalve (2,6) une fois qu'une fuite de fluides est détectée dans les locaux.

5. Système de contrôle selon l'une quelconque des revendications précédentes, **caractérisé en ce qu'**il comprend un module GSM (8) prévu pour recevoir un ordre d'instructions et/ou de contrôle.

6. Système de contrôle selon l'une quelconque des revendications de 3 à 5, **caractérisé en ce que** ledit panneau de contrôle électronique se compose d'un premier module pour gérer et contrôler le débit de gaz et d'un deuxième module pour gérer et contrôler le débit de liquides.

7. Système de contrôle selon la revendication 6, **caractérisé en ce que** au moins une desdites sections dudit panneau de contrôle électronique possède une horloge particulière programmable, chacun desdits modules ayant au moins une électrovalve particulière et étant équipé d'un détecteur spécifique (3,7).
